# FASCICULE DE BREVET EUROPEEN

(11) **EP 0 869 344 B1**
(45) Date de publication et mention de la délivrance du brevet: **03.09.2003**
(21) Numéro de dépôt: 98400707.0
(22) Date de dépôt: 26.03.1998
(51) Int. Cl.: G01M 3/20

(54) **Détecteur de fuite à gaz traceur**
Spürgas-Leckdetektor
Leak detector using a tracer gas

(30) Priorité: 03.04.1997 FR 9704077
(43) Date de publication de la demande: 07.10.1998
(73) Titulaire: ALCATEL, 75008 Paris (FR)
(72) Inventeur: Baret, Gilles, 74000 Annecy (FR); Gevaud, Roland, 74370 Argonay (FR); Devance, Alain, 73400 Ugine (FR)
(74) Mandataire: Lamoureux, Bernard

(56) Documents cités:
- EP-A- 0 432 305
- DE-A- 19 504 278
- DE-A- 19 523 430
- FR-A- 2 604 522
- US-A- 3 591 827
- G. REICH: "THE PRINCIPLE OF HE ENRICHMENT IN A COUNTERFLOW LEAK DETECTOR WITH A TURBOMOLECULAR PUMP WITH TWO INLETS" JOURNAL OF VACUUM SCIENCE AND TECHNOLOGY: PART A., vol. 5, no. 4, juillet 1987 - août 1987, NEW YORK US, pages 2641-2645, XP002049599

## Description

La présente invention concerne un détecteur de fuite à gaz traceur.

Plus particulièrement, l'invention a pour but de proposer un détecteur de fuite du type dans lequel une seule et même pompe primaire est utilisée d'une part, en association avec une pompe secondaire, pour assurer le vide nécessaire au fonctionnement de l'analyseur de gaz et d'autre part pour effectuer le prévidage de l'enceinte à tester reliée à l'entrée du détecteur.

Un détecteur de ce type (voir FR-A-2 604 522), couramment utilisé, est représenté figure 1. Il comprend un spectromètre 1, une pompe secondaire 2, une pompe primaire 3 dont l'aspiration est reliée au refoulement de la pompe secondaire 2 par une conduite 4 équipée d'une vanne 5. L'entrée 6 du détecteur est reliée par une conduite 7, équipée d'une vanne 8, à l'aspiration de la pompe primaire 3. Une conduite 9, équipée d'une vanne 10, permettant la mesure dite en "direct" relie la conduite 7 au spectromètre 1.

Un tel détecteur est très bien adapté pour détecter des petites fuites sur des pièces dont on veut tester l'étanchéité ; en revanche la détection de très grosses fuites n'est pas toujours possible ou peut être très longue :

En effet, après avoir effectué le vide dans le spectromètre 1, on effectue le prévidage dans la pièce à tester, reliée à l'entrée 6, par la pompe primaire 3, les vannes 5 et 10 étant fermées et la vanne 8 étant ouverte, la pompe 2 étant maintenue en marche et le spectromètre 1 étant en état de fonctionnement. On ne peut ouvrir la vanne 5, pour faire la mesure, en contre courant, que lorsque la pression à l'entrée du détecteur est descendu à au moins 10 mbar et même souvent 1 mbar. Cette pression devant être compatible avec la pression maximale de refoulement pour la pompe secondaire et permettre un fonctionnement correct de l'analyseur de gaz. Si la fuite est importante, le temps pour arriver à ce niveau de pression peut être très long ; on peut même n'y arriver jamais si la fuite est très importante. Dans ce dernier cas, on peut en déduire qu'il y a une grosse fuite par non descente en pression. Un cas plus grave concerne la détection de fuite sur des pièces scellées. Dans ce cas, les pièces à contrôler sont scellées sous gaz traceur ou bien scellées sous air ou gaz sec autre que le gaz traceur puis pressurisées dans une enceinte contenant le gaz traceur à une pression de l'ordre de quelques bars. Si la pièce présente une fuite, l'hélium pénètre dans la pièce par cette fuite. Après une immersion de quelques heures, la pièce est ôtée de cette enceinte pressurisée à l'hélium et placée dans une enceinte reliée à l'entrée 6 du détecteur. Si la pièce ne présente qu'une petite fuite, le prévidage de l'enceinte par la pompe primaire 3 permet d'arriver à une pression à l'entrée du détecteur, compatible avec le fonctionnement du spectromètre de masse 1 et donc d'ouvrir la vanne 5 bien avant que la pièce ne se soit vidée de son hélium et l'on peut donc très facilement faire la mesure de fuite ; mais si, au contraire, la fuite est très importante, l'hélium contenu dans la pièce peut-être évacué de celle-ci, et de l'enceinte, pendant la seule phase de prévidage et, lorsque l'on atteint la pression permettant d'ouvrir la vanne 5, l'hélium peut avoir été complètement évacué, ou en grande partie, et alors la mesure n'indiquera aucune fuite ou une faible fuite.

La présente invention a pour but de résoudre ce problème, avec ce type de détecteur, c'est-à-dire un détecteur où une seule et même pompe primaire assure le pompage du spectromètre, en association avec une pompe secondaire, et le prévidage de la pièce à contrôler ou d'une enceinte dans laquelle est placée la pièce à contrôler.

L'invention a ainsi pour objet un détecteur de fuite à gaz traceur comportant au moins un analyseur de gaz, une pompe secondaire dont l'aspiration est reliée à l'analyseur de gaz, une pompe primaire reliée au refoulement de la pompe secondaire par une première conduite équipée d'une première vanne, une seconde conduite reliant la première conduite, en un point situé entre ladite première vanne et ladite pompe primaire, à une entrée du détecteur destinée à être reliée à une enceinte, ladite seconde conduite étant équipée d'une seconde vanne, ladite pompe primaire assurant le prévidage de ladite enceinte, caractérisé en ce qu'un organe de prélèvement du flux circulant dans ladite seconde conduite est situé directement sur la paroi de ladite conduite, au contact direct dudit flux et est relié, par une canalisation, directement audit analyseur, ledit organe de prélèvement ayant une conductance telle qu'elle permet, dans ladite canalisation, une pression compatible avec le fonctionnement dudit analyseur de gaz alors même que ladite seconde conduite est à une pression supérieure à 10 mbar.

Avantageusement, afin de retarder la remontée de la pression au refoulement de la pompe secondaire lorsque la première vanne est fermée, que le spectromètre est en état de marche et que ladite seconde conduite, au niveau dudit organe de prélèvement, est à une pression supérieure à 10 mbar, un volume tampon est disposé entre le refoulement de la pompe secondaire et ladite première vanne.

L'invention a également pour objet un procédé de détection de grosses fuites utilisant un détecteur tel que ci-dessus, caractérisé par le fait qu'après avoir effectué le vide nécessaire dans l'analyseur de gaz, l'entrée du détecteur étant reliée à une enceinte contenant une pièce à contrôler, ou directement à la pièce à contrôler, on ferme ladite première vanne et l'on ouvre ladite seconde vanne, la mesure s'effectuant immédiatement.

Ainsi, on peut effectuer la mesure de grosses fuites alors même que la pièce n'est pas prévidée et le temps de réponse est très court puisque l'organe de prélèvement est au contact direct du flux chargé d'hélium.

On va maintenant donner la description d'un exemple de mise en oeuvre de l'invention en se référant au dessin annexé dans lequel :
- La figure 1, déjà commentée, est un schéma de détecteur de fuite de l'art antérieur.
- La figure 2 est un schéma de détecteur de fuite selon l'invention.
- la figure 3 est une variante de la figure 2.
- la figure 4 est une autre variante.
- La figure 5 est un détail des figures 2, 3 ou 4 montrant l'organe de prélèvement inséré dans la conduite de liaison reliant la pompe primaire à l'entrée du détecteur.

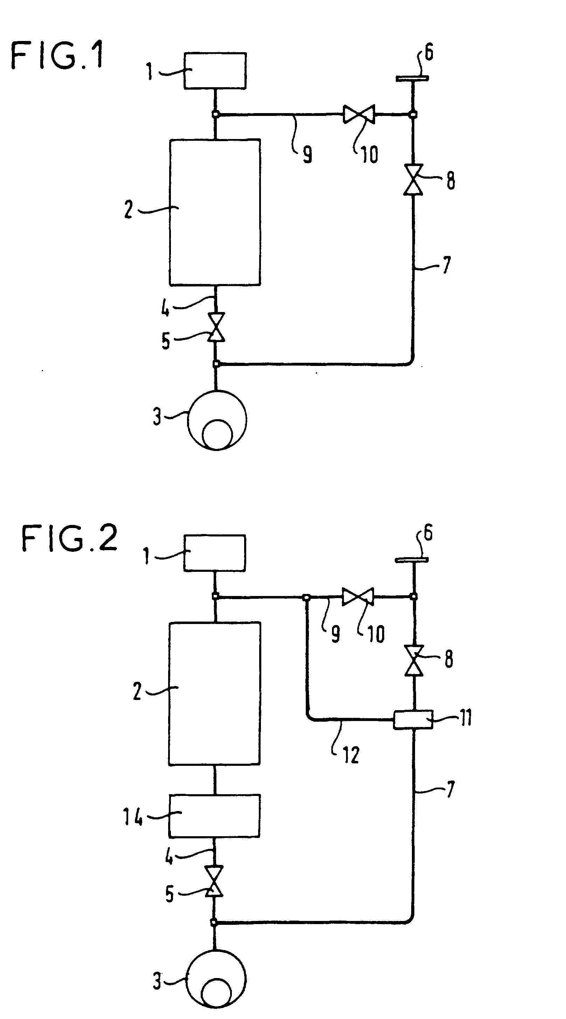

En se référant à la figure 2, le détecteur de fuite selon l'invention comprend un analyseur de gaz 1 tel qu'un spectromètre de masse calé sur le gaz traceur utilisé, tel que l'hélium par exemple. Il est relié à l'entrée d'une pompe secondaire 2 dont le refoulement est relié à une pompe primaire 3 par une première conduite 4 équipée d'une première vanne 5. Par ailleurs, le détecteur comporte une entrée 6, par exemple une bride d'entrée, destinée à être reliée soit directement à une pièce à contrôler par la méthode d'aspersion, soit à une enceinte contenant la pièce à contrôler et renfermant le gaz traceur (hélium). L'entrée 6 est reliée par une seconde conduite 7, équipée d'une seconde vanne 8, à l'aspiration de la pompe primaire 3, entre la pompe primaire et la première vanne 5. Le détecteur peut également comporter, mais non nécessairement, une troisième conduite 9 équipée d'une troisième vanne 10 reliant l'entrée 6 du détecteur au spectromètre 1 et permettant d'effectuer la mesure par la méthode dite "en direct" pour la mesure des fuites faibles.

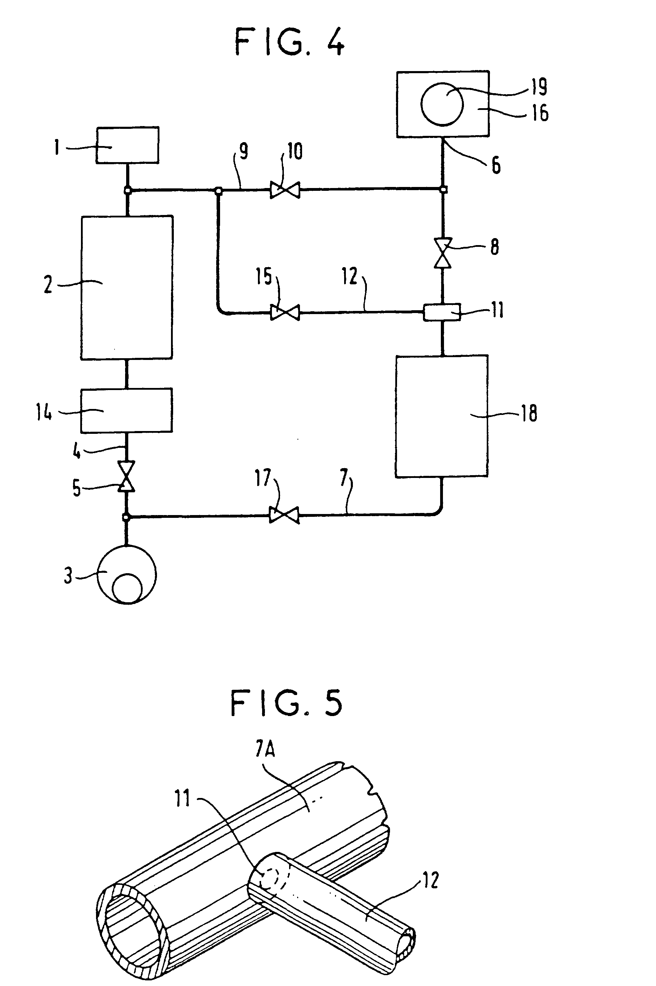

Selon l'invention, un organe de prélèvement 11 (voir détail figure 5) du flux circulant dans la seconde conduite 7 est situé sur la paroi de cette seconde conduite, par exemple sur la paroi d'une portion de conduite 7A insérée en série dans la conduite 7, et est en outre relié directement par une canalisation 12 à l'analyseur 1.

Cet organe de prélèvement a une conductance faible de façon à permettre une mesure d'étanchéité, donc la mise en fonctionnement du spectromètre de masse 1, alors même que la pression dans la seconde conduite 7, au niveau de l'organe de prélèvement, est supérieure à 10 mbar et par exemple égal à la pression atmosphérique. C'est-à-dire qu'elle doit permettre d'avoir dans ces conditions une pression d'environ 10⁻⁴ mbar dans la canalisation 12, la pompe secondaire 2 fonctionnant, mais la première vanne 5 étant fermée.

Cet organe de prélèvement 11 est par exemple un simple orifice calibré effectué dans la paroi de la conduite 7 ou 7A. L'organe de prélèvement 11 peut aussi être une membrane poreuse, ou un film, appliqué contre un orifice dans la paroi de la conduite 7 ou 7A et permettant la diffusion du gaz traceur.

Le fonctionnement est alors le suivant :

On suppose que le détecteur est relié, par son entrée 6, à une pièce à contrôler ou bien à une enceinte contenant la pièce à contrôler contenant le gaz traceur.

Les vannes 8 et 10 sont fermées et l'on effectue le vide dans le spectromètre 1 en ouvrant la première vanne 5, les pompes secondaire 2 et primaire 3 étant en marche. Dès que la pression à l'aspiration de la pompe secondaire 2 atteint une valeur compatible avec le fonctionnement du spectromètre 1, celui-ci est mis en marche et l'on peut immédiatement effectuer la mesure en très grosses fuites en fermant la première vanne 5 et en ouvrant la seconde vanne 8. La présence d'hélium dans le flux de gaz pompé est alors mesurée par le spectromètre 1 à travers l'organe de prélèvement 11. Si la fuite n'est pas trop importante, la pression diminue dans la seconde conduite 7 et lorsqu'elle atteint une pression compatible avec l'ouverture de la première vanne 5 permettant une mesure en contre-courant, on ouvre cette vanne 5 selon le procédé classique, puis si la pression baisse encore, en cas de faible fuite ou absence de fuite, on ferme la seconde vanne 8 et on ouvre la troisième vanne 10 pour une mesure en direct. La pression maximale admissible au refoulement de la pompe secondaire 2 détermine le seuil d'ouverture de la vanne 5, cette pression est généralement comprise entre 1 et 10 mbar.

Dans le fonctionnement en très grosses fuites, avec les vannes 5 et 10 fermées et la vanne 8 ouverte, le flux prélevé dans la conduite 7 par l'organe de prélèvement 11 et circulant dans la canalisation 12 est évacué en cul de sac par la pompe secondaire 2 puisque la première vanne 5 est fermée. On a donc avantage à utiliser une pompe secondaire 2 à taux de compression élevé et pouvant fonctionner à une pression de refoulement élevée par exemple de 10 mbar en utilisant, par exemple, une pompe turbomoléculaire hybride.

Dans le schéma de détecteur représenté figure 2, un volume tampon 14 est disposé entre le refoulement de la pompe secondaire 2 et la première vanne 5. Ceci a pour avantage de retarder la remontée en pression ou refoulement de la pompe secondaire 2 et donc dans le spectromètre 1 à une valeur incompatible avec son fonctionnement.

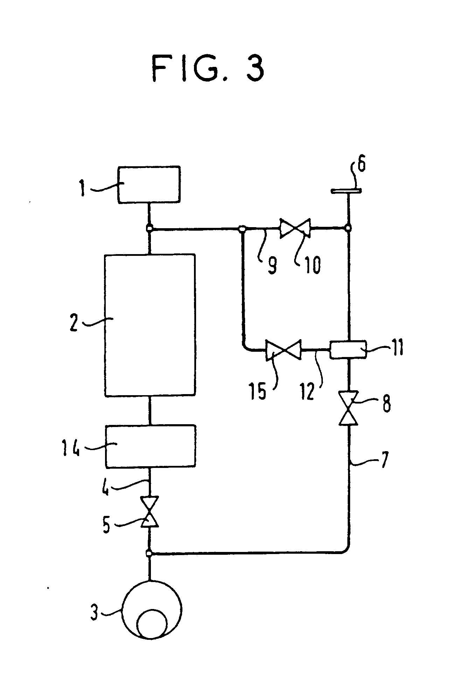

Il est à noter que l'organe de prélèvement 11 est placé, sur la figure 2 entre la seconde vanne 8 et la pompe primaire 3. Cela n'est pas absolument nécessaire. Elle peut être placée comme le montre la réalisation de la figure 3 entre l'entrée 6 du détecteur et la seconde vanne 8 à condition de prévoir un moyen de sécurité pour le spectromètre 1. Il peut s'agir, par exemple, d'une vanne de sécurité 15 située sur la canalisation 12 entre l'organe de prélèvement 11 et le spectromètre 1. Cette vanne de sécurité est normalement toujours ouverte et elle est commandée pour se fermer automatiquement dès que la pression à l'aspiration de la pompe secondaire monte à une valeur incompatible avec le fonctionnement du spectromètre. On peut également prévoir de couper automatiquement l'alimentation du spectromètre si la pression à l'aspiration de la pompe secondaire monte à cette valeur incompatible avec le fonctionnement du spectromètre 1.

Le procédé de fonctionnement est le même que celui de la figure 2 : dès que l'on a effectué le vide dans le spectromètre 1, et ceci est possible si la conductance de l'organe de prélèvement est faible, on ferme la vanne 5 et l'on ouvre la seconde vanne 8 de manière à effectuer le prévidage de l'enceinte, non représentée, reliée à l'entrée 6, mais la mesure s'effectue instantanément si de l'hélium existe dans le flux aspiré et passant devant l'organe de prélèvement 11.

Si l'organe de prélèvement 11 est placé judicieusement très près de l'orifice de raccordement 6 et si la pression de gaz traceur dans la pièce à tester est supérieure à la pression atmosphérique de l'enceinte raccordée à l'orifice 6, et dans laquelle la pièce à tester est placée, on peut détecter la présence d'une fuite avant même l'ouverture de la vanne 8 grâce au flux pompé par l'organe de prélèvement 11.

La figure 4 montre une autre variante. Dans cette variante, la bride 6 est reliée à une enceinte 16 contenant la pièce 19 à tester qui renferme le gaz traceur. Un volume intermédiaire 18 est situé entre l'organe de prélèvement 11 et la pompe primaire 3, une vanne d'isolement 17 étant située entre ce volume 18 et la pompe 3.

Cette variante fontionne comme suit :

Lorsque la seconde vanne 8 est fermée, on pompe dans le volume intermédiaire 18 par la pompe primaire 3, la vanne d'isolement 17 étant ouverte et la première vanne 5 étant fermée, afin d'amener la pression dans ce volume 18 à une valeur inférieure à la pression atmosphérique.

On ferme ensuite la vanne d'isolement 17 puis on ouvre la seconde vanne 8 afin de détendre le volume de l'enceinte 16 dans le volume intermédiaire 18. L'hélium se trouvant dans la pièce à tester, si elle fuit, s'échappe grâce à la différence de pression et peut être mesuré par l'organe 11 qui peut aussi bien se trouver sur le volume 18 que sur la bride d'entrée 6.

## Revendications

1. Détecteur de fuite à gaz traceur comportant au moins un analyseur de gaz (1), une pompe secondaire (2) dont l'aspiration est reliée à l'analyseur de gaz (1), une pompe primaire (3) reliée au refoulement de la pompe secondaire (2) par une première conduite (4) équipée d'une première vanne (5), une seconde conduite (7, 7A) reliant la première conduite (4), en un point situé entre ladite première vanne (5) et ladite pompe primaire (3), à une entrée (6) du détecteur destinée à être reliée à une enceinte, ladite seconde conduite (7) étant équipée d'une seconde vanne (8), ladite pompe primaire assurant le prévidage de ladite enceinte, **caractérisée en ce qu'**un organe de prélèvement (11) du flux circulant dans ladite seconde conduite (7) est situé directement sur la paroi de ladite conduite (7, 7A), au contact direct dudit flux et est relié, par une canalisation (12), directement audit analyseur (1), ledit organe de prélèvement (11) ayant une conductance telle qu'elle permet dans ladite canalisation (12) une pression compatible avec le fonctionnement dudit analyseur de gaz alors même que ladite seconde conduite (7) est à une pression supérieure à 10 mbar.

2. Détecteur selon la revendication 1, **caractérisé en ce que** ledit organe de prélèvement (11) est situé entre ladite seconde vanne (8) et ladite pompe primaire (3).

3. Détecteur selon la revendication 1, **caractérisé en ce que** ledit organe de prélèvement (11) est situé entre ladite seconde vanne (8) et ladite entrée (6) du détecteur, des moyens étant prévus pour assurer la sécurité de l'analyseur.

4. Détecteur selon la revendication 3, **caractérisé en ce que** lesdits moyens comportent une vanne de sécurité (15) disposée sur ladite canalisation (12) entre l'analyseur (1) et ledit organe de prélèvement (11), ladite vanne (15) étant commandée pour se fermer automatiquement si la pression à l'aspiration de ladite pompe secondaire (2) est incompatible avec le fonctionnement de l'analyseur de gaz (1).

5. Détecteur selon l'une des revendications 3 ou 4 **caractérisé en ce que** lesdits moyens comportent l'arrêt de l'alimentation dudit analyseur de gaz (1) si la pression à l'aspiration de ladite pompe secondaire (2) est incompatible avec le fonctionnement de l'analyseur de gaz (1).

6. Détecteur selon l'une des revendications 1 à 5, **caractérisé en ce qu'**un volume tampon (14) est disposé entre le refoulement de la pompe secondaire (2) et ladite première vanne (5).

7. Détecteur selon l'une des revendications 1 à 6, **caractérisé en ce que** ledit organe de prélèvement (11) est un orifice calibré pratiqué sur la paroi de la seconde conduite (7, 7A).

8. Détecteur selon l'une des revendications 1 à 6 **caractérisé en ce que** ledit organe de prélèvement (11) est une membrane poreuse, vis-à-vis du gaz traceur, appliqué contre un orifice de la paroi de la seconde conduite (7, 7A).

9. Procédé de détection de grosses fuites utilisant un détecteur selon l'une des revendications précédentes, **caractérisé en ce qu'**après avoir effectué le vide nécessaire dans l'analyseur de gaz (1), l'entrée (6) du détecteur étant reliée à une enceinte contenant une pièce à contrôler ou directement à la pièce à contrôler, on ferme ladite première vanne (5) et l'on ouvre ladite seconde vanne (8), la mesure s'effectuant immédiatement.

10. Procédé selon la revendication 9, **caractérisé en ce que** dès que la pression atteint une valeur comprise entre 10 mbar et 1 mbar, cette valeur dépendant du taux de compression de ladite pompe secondaire (2), à l'entrée (6) du détecteur, on ouvre ladite première vanne (5).

11. Détecteur selon l'une des revendications 1 à 8, **caractérisé en ce qu'**un volume intermédiaire (18) est placé dans la seconde conduite (7) entre ledit organe de prélèvement (11) et une vanne d'isolement (17).

12. Procédé de détection utilisant un détecteur selon la revendication 11, **caractérisé par le fait que** l'on effectue une détente de l'enceinte (16) reliée à l'entrée (6) du détecteur et contenant une pièce à tester (19) renfermant du gaz traceur, dans ledit volume intermédiaire (18).

## Patentansprüche

1. Spürgas-Leckdetektor mit wenigstens einem Gasanalysator (1), einer sekundären Pumpe (2) deren Ansaugung mit dem Gasanalysator (1) verbunden ist, einer primären Pumpe (3), die mit der Förderung der sekundären Pumpe (2) durch einen mit einem ersten Ventil (5) ausgerüsteten ersten Gang (4) verbunden ist, einem zweiten Gang (7, 7A), welcher den ersten Gang (4) in einem zwischen dem ersten Ventil (5) und der primären Pumpe (3) befindlichen Punkt mit einem Eingang (6) des Detektors, welcher mit einer Einfassung verbunden werden soll, verbunden ist, wobei der zweite Gang (7) mit einem zweiten Ventil (8) ausgerüstet ist, die primäre Pumpe die Vor-Evakuierung der Einfassung sicherstellt, **dadurch gekennzeichnet, dass** ein Organ zur Entnahme (11) des zirkulierenden Flusses in dem zweiten Gang (7) direkt auf der Wand des zweiten Gangs (7, 7A) befindlich ist, in direktem Kontakt mit dem Fluss, und durch eine Leitung (12) direkt mit dem Analysator (1) verbunden ist, wobei das Entnahmeorgan (11) eine Konduktanz aufweist, derart, dass sie in der Leitung (12) einen Druck ermöglicht, der mit der Funktion des Gasanalysators kompatibel ist, sogar wenn der zweite Gang (7) einen Druck von mehr als 10 mbar aufweist.

2. Detektor nach Anspruch 1, **dadurch gekennzeichnet, dass** das Entnahmeorgan (11) zwischen dem zweiten Ventil (8) und der primären Pumpe (3) befindlich ist.

3. Detektor nach Anspruch 1, **dadurch gekennzeichnet, dass** das Entnahmeorgan (11) zwischen dem zweiten Ventil (8) und dem Eingang (6) des Detektors befindlich ist, wobei Mittel vorgesehen sind, um die Sicherheit des Analysators zu gewährleisten.

4. Detektor nach Anspruch 3, **dadurch gekennzeichnet, dass** die Mittel ein Sicherheitsventil (15) umfassen, das in der Leitung (12) zwischen dem Analysator (1) und dem Entnahmeorgan (11) angeordnet ist, wobei das Ventil (15) gesteuert ist um sich automatisch zu schließen, wenn der Druck an der Ansaugung der sekundären Pumpe (2) mit der Funktion des Gasanalysators (1) inkompatibel ist.

5. Detektor nach einem der Ansprüche 3 oder 4, **dadurch gekennzeichnet, dass** die Mittel den Stopp der Versorgung des Gasanalysators (1) umfassen, wenn der Druck an der Ansaugung der sekundären Pumpe (2) mit der Funktion des Gasanalysators (1) inkompatibel ist.

6. Detektor nach einem der Ansprüche 1 bis 5, **dadurch gekennzeichnet, dass** ein Volumenpuffer (14) zwischen der Förderung der sekundären Pumpe (2) und dem ersten Ventil (5) angeordnet ist.

7. Detektor nach einem der Ansprüche 1 bis 6, **dadurch gekennzeichnet, dass** das Entnahmeorgan (11) eine auf der Wand des zweiten Gangs (7, 7A) ausgeführte kalibrierte Öffnung ist.

8. Detektor nach einem der Ansprüche 1 bis 6, **dadurch gekennzeichnet, dass** das Entnahmeorgan (11) eine poröse Membran ist, die gegenüber des Spürgases gegen eine Öffnung der Wand des sekundären Gangs (7, 7A) gelegt ist.

9. Verfahren zur Detektion großer Lecks, welches einen Detektor nach einem der vorhergehenden Ansprüche verwendet, **dadurch gekennzeichnet, dass**, nachdem das in dem Gasanalysator (1) notwendige Vakuum erstellt worden ist, wobei der Eingang (6) des Detektors mit einer ein zu kontrollierendes Teil enthaltenden Einfassung oder direkt mit dem zu kontrollierenden Teil verbunden ist, das erste Ventil (5) geschlossen wird und das zweite Ventil (8) geöffnet wird, wobei die Maßnahme unmittelbar ausgerührt wird.

10. Verfahren nach Anspruch 9, **dadurch gekennzeichnet, dass**, sobald der Druck einen Wert erreicht der zwischen 10 mbar und 1 mbar liegt, wobei dieser von dem Kompressionsgrad der sekundären Pumpe (2) am Eingang (6) des Detektors abhängt, das erste Ventil (5) geöffnet wird.

11. Detektor nach einem der Ansprüche 1 bis 8, **dadurch gekennzeichnet, dass** ein Zwischenvolumen (18) in dem zweiten Gang (7) zwischen dem Entnahmeorgan (11) und einem Isolierventil (17) platziert ist.

12. Verfahren zur Detektion, welches einen Detektor nach Anspruch 11 verwendet, **dadurch gekennzeichnet, dass** man eine Entspannung der Einfassung (16), welche mit dem Eingang (6) des Detektors verbunden ist und ein Spürgas enthaltendes zu prüfendes Teil (19) enthält, in das Zwischenvolumen durchführt.

## Claims

1. A tracer gas leak detector comprising at least one gas analyzer (1), a secondary pump (2) whose suction is connected to the gas analyzer (1), a primary pump (3) connected to the delivery of the secondary pump (2) via a first pipe (4) fitted with a first valve (5), and a second pipe (7, 7A) connecting the first pipe (4) from a point situated between said first valve (5) and said primary pump (3) to an inlet (6) of the detector for connection to an enclosure, said second pipe (7) being fitted with a second valve (8), said primary pump serving to pre-evacuate said enclosure, the detector being **characterized in that** a sampling member (11) for sampling the flow travelling along said second pipe (7) is situated directly on the wall of said second pipe (7, 7A) in direct contact with said flow and is connected via a duct (12) directly to said analyzer (1), said sampling member (11) having conductance enabling the pressure in said duct (12) to be compatible with operation of said gas analyzer while said second pipe (7) is at a pressure greater than 10 mbar.

2. A detector according to claim 1, **characterized in that** said sampling member (11) is situated between said second valve (8) and said primary pump (3).

3. A detector according to claim 1, **characterized in that** said sampling member (11) situated between said second valve (8) and said inlet (6) of the detector, safety means being provided to ensure the safety of the analyzer.

4. A detector according to claim 3, **characterized in that** said safety means comprise a safety valve (15) disposed on said duct (12) between the analyzer (1) and said sampling member (11), said safety valve (15) being closed automatically if the pressure at the suction of the secondary pump (2) is incompatible with operation of the gas analyzer (1).

5. A detector according to claim 3 or 4, **characterized in that** said safety means comprise means for switching off the power to said gas analyzer (1) if the pressure at the suction of said secondary pump (2) is incompatible with operation of the gas analyzer (1).

6. A detector according to any one of claims 1 to 5, **characterized in that** a buffer volume (14) is disposed between the delivery of the secondary pump (2) and said first valve (5).

7. A detector according to any one of claims 1 to 6, **characterized in that** said sampling member (11) is a calibrated orifice formed through the wall of the second pipe (7, 7A).

8. A detector according to any one of claims 1 to 6, **characterized in that** said sampling member (11) is a membrane that is porous to the tracer gas and that is applied against an orifice through the wall of the second pipe (7, 7A).

9. A method of detecting large leaks using a detector according to any preceding claim, the method being **characterized in that** after the necessary vacuum has been established in the gas analyzer (1), and the inlet (6) of the detector has been connected either to an enclosure containing a part to be inspected or else directly to the part to be inspected, said first valve (5) is closed and said second valve (8) is opened, with measurement taking place immediately.

10. A method according to claim 9, **characterized in that** as soon as the pressure at the inlet (6) of the detector has reached a value lying in the range 10 mbar to 1 mbar, which value depends on the compression ratio of said secondary pump (2), said first valve (5) is opened.

11. A detector according to any one of claims 1 to 8, **characterized in that** an intermediate volume (18) is placed in the second pipe (7) between said sampling member (11) and an isolating valve (17).

12. A detection method using the detector of claim 11, **characterized by** the fact that the enclosure (16) connected to the inlet (6) of the detector and containing the part (19) to be tested itself containing the tracer gas is allowed to expand into said intermediate volume (18).
